# EUROPÄISCHE PATENTSCHRIFT

(11) **EP 3 722 512 B1**
(45) Veröffentlichungstag und Bekanntmachung des Hinweises auf die Patenterteilung: **08.06.2022**
(21) Anmeldenummer: 19167742.6
(22) Anmeldetag: 08.04.2019
(51) Int. Cl.: E02D 7/00

(54) **TIEFBAUGERÄT UND VERFAHREN ZUM BETREIBEN DES TIEFBAUGERÄTS**
EXCAVATION DEVICE AND METHOD FOR OPERATING SAME
APPAREIL DE TRAVAUX DE GÉNIE CIVIL EN PROFONDEUR ET SON PROCÉDÉ DE FONCTIONNEMENT

(43) Veröffentlichungstag der Anmeldung: 14.10.2020
(73) Patentinhaber: BAUER Maschinen GmbH, 86529 Schrobenhausen (DE)
(72) Erfinder: ELSNER, Thomas, 86529 Schrobenhausen (DE); MAGER, Paul, 22337 Hamburg (DE); ZIEGLER, Andreas, 86565 Gachenbach (DE)
(74) Vertreter: Wunderlich & Heim Patentanwälte Partnerschaftsgesellschaft mbB

(56) Entgegenhaltungen:
- EP-A1- 2 275 604
- EP-A1- 2 584 097
- DE-A1- 4 415 029
- KR-A- 20020 033 703

## Beschreibung

Die Erfindung betrifft ein Tiefbaugerät mit mindestens einem Arbeitselement für eine Bodenbearbeitung, mindestens zwei Betätigungseinheiten, mindestens einer Messeinrichtung zum Bestimmen mindestens eines aktuellen Betätigungsparameters für jede Betätigungseinheit, und einer Steuereinrichtung, welche zum Steuern der Betätigungseinheiten ausgebildet ist, wobei die Steuereinrichtung mit den Messeinrichtungen in Verbindung steht und ausgebildet ist, zum Vermeiden eines Kippens des Tiefbaugeräts anhand von vorab berechneten Grenzbetätigungsparametern für die Betätigungseinheiten, welche genau einen einzelnen zulässigen Arbeitsbereich definieren, bei Erreichen eines Grenzbetätigungsparameters zumindest einer der Betätigungseinheiten ein weiteres Betätigen dieser Betätigungseinheit einzuschränken oder das Erreichen des Grenzbetätigungsparameters und/oder den Grenzbetätigungsparameter einem Bediener anzuzeigen, gemäß dem Oberbegriff des Anspruchs 1.

Weiterhin betrifft die Erfindung ein Verfahren zum Betreiben eines solchen Tiefbaugeräts nach dem Anspruch 12.

Ein derartiges Tiefbaugerät geht beispielsweise aus der EP 2 275 604 A1 hervor. An der Tragmechanik des Mastes gegenüber der Trägervorrichtung ist ein Sensor angeordnet, welcher eine Verstellposition des Mastes erfassen kann. Der Sensor steht dabei mit einer Steuereinheit in Verbindung, durch welche bei Erreichen einer Grenzposition des Mastes ein Stellantrieb des Mastes blockiert wird. Hierdurch kann zuverlässig ein Betriebszustand des Tiefbaugerätes verhindert werden, bei welchem sich eine kritische Position für die Kippsicherheit ergeben kann.

Mit einer solchen Begrenzung können jedoch die durch die Verstellmechanik gegebenen Möglichkeiten erheblich begrenzt werden. An vielen Geräten ist daher etwa für Rüstvorgänge die Möglichkeit vorgesehen, elektronische Sperren und Verstellbegrenzungen aufzuheben und Verstellungen des Mastes für bestimmte Fälle über die normalen Grenzbetätigungsparameter hinaus vorzusehen. In einem solchen Fall übernimmt dann der Maschinenbediener unmittelbar die Verantwortung für einen möglichen kritischen Betriebszustand der Maschine. Dies kann zu Betriebsunfällen führen.

Der Erfindung liegt die **Aufgabe** zugrunde, ein Tiefbaugerät und ein Verfahren zum Betreiben des Tiefbaugerätes anzugeben, mit welchen eine erhöhte Flexibilität bei den Verstellmöglichkeiten bei gleichzeitig weiter hoher Betriebssicherheit gewährleistet ist.

Die Aufgabe wird zum einen durch ein Tiefbaugerät mit den Merkmalen des Anspruchs 1 und zum anderen durch ein Verfahren mit den Merkmalen des Anspruchs 12 gelöst. Bevorzugte Ausführungsformen der Erfindung sind in den abhängigen Ansprüchen angegeben.

Das erfindungsgemäße Tiefbaugerät ist dadurch gekennzeichnet, dass in der Steuereinrichtung mindestens zwei unterschiedliche einzelne Arbeitsbereiche hinterlegt sind, wobei jeder einzelne Arbeitsbereich einen unterschiedlichen Satz von Grenzbetätigungsparametern für n Parameter für die Betätigungseinheiten aufweist, und dass einer oder mehrere der einzelnen Arbeitsbereiche über die Steuereinrichtung auswählbar sind.

Eine Grundidee der Erfindung kann darin gesehen werden, weder einen einzigen Arbeitsbereich für das Tiefbaugerät vorzusehen noch über eine Rechnereinheit aufgrund hinterlegter Algorithmen aktuell mögliche Grenzbetätigungsparameter neu zu berechnen. Vielmehr stellt die Erfindung in gewisser Weise eine Zwischenlösung dar, bei welcher vorab von einem Gerätehersteller unterschiedliche einzelne Arbeitsbereiche mit unterschiedlichen Sätzen von Grenzbetätigungsparametern berechnet und vorgegeben werden. So können bestimmte Parameter von Betätigungseinheiten überwacht werden, wobei gleichzeitig für weitere Betätigungseinheiten angepasste Grenzbetätigungsparameter vorgegeben werden. Es ist somit eine Anpassung von kombinierten zulässigen Arbeitsbereichen ohne aufwändige Berechnung in dem Gerät durch eine einfache Auswahl aus vorgegebenen einzelnen Arbeitsbereichen mit jeweils hierzu hinterlegten Datensätzen möglich. Aus der Kombination möglicher einzelner Arbeitsbereiche mit jeweils unterschiedlichen zulässigen Grenzbetätigungsparametern kann ein vergrößerter kombinierter zulässiger Arbeitsbereich bestimmt werden.

Gemäß der Erfindung werden also Standsicherheitsvorgaben mit jeweils einzelnen Arbeitsbereichen und deren jeweiligen Grenzbetätigungsparametern vorab berechnet.

Der Kunde erwirbt eine Auswahl an Standsicherheitsvorgaben, insbesondere abhängig von der Ausrüstung, mit den entsprechenden einzelnen Arbeitsbereichen. Diese werden in der Steuerung hinterlegt, etwa aus einem Gerätespeicher, einem Datenträger oder per Datenfernübertragung.

Die Auswahl der relevanten Standsicherheitsvorgabe erfolgt entweder durch den Bediener oder durch die Steuereinrichtung anhand von automatisch ermittelter Ausrüstung.

Vorzugsweise wird ständig mindestens einer von den n Parametern gemessen. Die Steuereinrichtung prüft, in welchen einzelnen Arbeitsbereichen der gemessene Parameterwert bzw. die gemessenen Parameterwerte sich innerhalb des Min.-Max-Intervalls befinden. Aus diesen einzelnen zulässigen Arbeitsbereichen können für alle n Parameter jeweils die niedrigsten Min.- und die höchsten Max.-Werte ausgelesen und in der Steuereinrichtung hinterlegt werden. Es ist auch möglich, andere Grenzbetätigungsparameter (Min.-Max.-Werte) innerhalb dieser Grenzen zu wählen.

Mindestens 1 bis n dieser Grenzbetätigungsparameter werden jeweils dem Bediener angezeigt und/oder mindestens 1 bis n dieser Grenzbetätigungsparameter werden jeweils von der Steuereinrichtung als "Anschlag" für die Betätigung von Verstelleinrichtungen genutzt, z. B. als Abschaltfunktion für die Mastausladung oder als Begrenzungsfunktion für die Drehgeschwindigkeit.

Verändern sich einer oder mehrere dieser Parameter, z. B. die Last wird angehoben und/oder der Mast bzw. Ausleger ausgefahren, werden die Grenzbetätigungsparameter durch die laufende Überwachung an die sich dadurch ändernden Messwerte angepasst. Die jeweils zulässigen einzelnen Arbeitsbereiche können sich permanent ändern, dadurch stehen je nach Situation mehr und höhere Grenzbetätigungsparameter zur Verfügung als bei Festlegung des zulässigen Arbeitsbereichs durch genau einen einzelnen Arbeitsbereich.

Im Stand der Technik wird nur jeweils ein einzelner Arbeitsbereich aus einem Satz von einzelnen Arbeitsbereichen zur Verfügung gestellt, der von einigen festen Parametern ausgeht und dadurch für viele Fälle zu enge Grenzbetätigungsparameter vorgibt. In einzelnen Fällen gibt es die Möglichkeit, durch entsprechende Betätigungsmittel diese Grenzbetätigungsparameter zu überschreiten, wobei jedoch der statisch vom Gerätehersteller geprüfte Arbeitsbereich verlassen wird.

Alternativ dazu werden im Stand der Technik die Grenzbetätigungsparameter der einzelnen Arbeitsbereiche dem Bediener in Schriftform zur Verfügung gestellt. Der Bediener muss als permanent prüfen, in welchem der einzelnen Arbeitsbereiche er sich aktuell befindet und welche Grenzbetätigungsparameter einzuhalten sind. Dies birgt das Risiko von Fehlern, die im schlimmsten Fall zu einem Umkippen des Tiefbaugeräts mit den entsprechenden Folgen führen kann.

Eine bevorzugte Ausführungsform der Erfindung besteht darin, dass eine mehrere einzelne Arbeitsbereiche umfassende Standsicherheitsvorgabe, abhängig von der Ausrüstung, insbesondere einem Arbeitselement, der Betriebsart und/oder weiterer Kriterien auswählbar ist. So kann etwa bei einem Bohrgerät abhängig von dem ausgewählten Bohrwerkzeug, etwa einem Bohreimer oder einer Endlosschnecke, eine geeignete Standsicherheitsvorgabe ausgewählt werden, die mehrere einzelne Arbeitsbereiche enthält. Auch bei der Betriebsart kann beispielsweise zwischen einem Bohrbetrieb oder einem Rüstbetrieb unterschieden werden, wobei bei einem Rüstbetrieb aufgrund geringerer Betriebskräfte eine andere Standsicherheitsvorgabe mit Arbeitsbereichen mit in der Regel weiteren oder größeren Grenzbetätigungsparametern, etwa für Verstellbereiche, vorgesehen werden kann. Gleichzeitig wären dann etwa bei einem Rüstbetrieb Betätigungseinheiten etwa für einen Vorschub beschränkt oder insgesamt gesperrt, oder es wird eine geringere zulässige Windenhubkraft angezeigt. Hinsichtlich weiterer Kriterien kann beispielsweise eine Auswahl der Standsicherheiten abhängig von den Bodenverhältnissen gewählt werden. Liegt ein fester und sicherer Boden vor, so kann eine andere Standsicherheitsvorgabe mit anderen einzelnen Arbeitsbereichen gewählt werden als bei einem weicheren Boden.

Grundsätzlich sind die Standsicherheitsvorgaben mit ihren jeweiligen einzelnen Arbeitsbereichen, welche in dem Tiefbaugerät hinterlegt sind, veränderbar. Nach einer Ausführungsform der Erfindung ist es dabei vorteilhaft, dass die Standsicherheitsvorgaben in der Steuereinrichtung abhängig von einer Ausrüstung des Tiefbaugerätes, insbesondere einem Arbeitselement, in eine Datenbank der Steuereinrichtung übertragen sind. Ist beispielsweise als Arbeitselement ein spezielles Bohrwerkzeug ausgewählt und an dem Tiefbaugerät angebaut, so sind in der Datenbank der Steuereinrichtung nur die einzelnen Arbeitsbereiche gespeichert oder zumindest abrufbar, welche für dieses Arbeitselement berechnet sind. Die Übertragung in den Datenspeicher der Steuereinrichtung kann durch Einsetzen eines entsprechenden Datenträgers oder per Datenfernübertragung erfolgen.

Grundsätzlich können alle verschiedenen Betätigungseinheiten, welche an einem Tiefbaugerät vorgesehen sein können, bei der erfindungsgemäßen Anordnung berücksichtigt sein. Vorzugsweise weisen die Betätigungseinheiten jeweils mindestens einen Betätigungsantrieb auf.

Nach einer Weiterbildung der Erfindung ist es bevorzugt, dass als Betätigungsparameter Vorschubkräfte am Arbeitselement, Windenkräfte, hydraulische Betriebsdrücke, Betriebsstellungen von Komponenten des Tiefbaugeräts, insbesondere des Mastes; eines Fahrwerks, eines Oberwagens, Zustände von zusätzlichen Stützen, von Drehgeschwindigkeiten, insbesondere des Oberwagens und/oder von Drehbeschleunigungen, insbesondere des Oberwagens, vorgesehen sind.

Nach einer Ausführungsvariante der Erfindung kann es weiterhin vorgesehen sein, dass als weitere passive Betätigungsparameter ein Winddruck und/oder eine Neigung des Tiefbaugeräts oder die Masse eines Gegengewichts mittels Sensorelementen der Messeinrichtung bestimmbar oder über den Bediener oder eine Erkennung eingebbar sind.

Des Weiteren ist es bevorzugt, dass eine Trägervorrichtung, ein Mast, welcher verstellbar zumindest in einer horizontalen Richtung an der Trägervorrichtung gelagert ist, wobei zum Verstellen mindestens ein Mastverstellantrieb vorgesehen ist, und eine Messeinrichtung zum Erfassen einer Verstellposition des Mastes zumindest in einer horizontalen Richtung vorgesehen sind, wobei die Steuereinrichtung ausgebildet ist, bei einer Erhöhung des Abstands des Mastes über einen ersten Grenzabstand des Mastes einen vorgegebenen Grenzparameter für die mindestens eine weitere Betätigungseinheit festzusetzen, durch welchen ein Betrieb des Betätigungsantriebes der weiteren Betätigungseinheit begrenzt wird.

Dabei ist vorgesehen, dass die Steuereinrichtung permanent überprüft, in welchen einzelnen Arbeitsbereichen sich die jeweiligen Betätigungseinheiten befinden, daraus die zulässigen einzelnen Arbeitsbereiche ermittelt, in denen die Werte aller erfassten Betätigungseinheiten innerhalb der Grenzbetätigungsparameter liegen, und von den Grenzbetätigungsparametern aus diesen zulässigen einzelnen Arbeitsbereichen den maximalen Grenzbetätigungsparameter als Grenzbetätigungsparameter für die weitere Betätigungseinheit festlegt. Wird beispielsweise ein horizontaler Abstand des Mastes zur Trägervorrichtung über einen ersten Grenzbetätigungsparameter hinaus erhöht, wird dadurch mindestens ein einzelner Arbeitsbereich unzulässig, sodass für mindestens einen anderen Betriebsparameter mindestens einer weiteren Betätigungseinheit ein anderer niedrigerer Grenzbetätigungsparameter festgesetzt wird, also etwa eine Begrenzung der Drehgeschwindigkeit des Oberwagens oder von Zugkräften am Mast. Dieser Zustand für den erweiterten Grenzabstand des Mastes ist dabei vorab auf seine statische Kippsicherheit berechnet und geprüft.

Grundsätzlich kann die Überschreitung des Grenzbetätigungsparameters und der Wegfall des mindestens einen einzelnen zulässigen Arbeitsbereichs eine Anpassung verschiedenster Betriebsparameter zur Folge haben. Besonders bevorzugt ist es nach einer Weiterbildung der Erfindung, dass die mindestens eine Betätigungseinheit eine Seilwinde zum Verfahren eines Arbeitselementes entlang des Mastes, eine Hilfswinde für ein Hilfsseil, eine Stelleinheit zum Neigen des Mastes gegenüber einer Vertikalen und/oder eine Verdreheinrichtung zum Verdrehen des Oberwagens mit dem Mast gegenüber einem Unterwagen aufweist. Das entlang des Mastes verfahrbare Arbeitselement kann insbesondere ein Schlitten, vorzugsweise ein Bohrantriebsschlitten sein, an welchem ein Tiefbauwerkzeug angebracht ist. Das Hilfsseil der Hilfswinde ist vorzugsweise über Umlenkrollen am Mastkopf geführt und kann für zusätzliche Hubeinsätze, etwa zum Anheben von Bohrgestängeelementen oder Tiefbauwerkzeugen eingesetzt werden. Hinsichtlich der Verdreheinrichtung kann der Grenzbetätigungsparameter einen Verdrehwinkel oder eine Verdrehgeschwindigkeit betreffen. Die Festlegung eines Grenzbetätigungsparameters kann auch ein Nullwert sein, so dass ein entsprechender Antrieb, etwa für das Hilfsseil, gesperrt wird.

Eine weitere Erhöhung des zulässigen kombinierten Arbeitsbereichs kann dadurch erzielt werden, dass in der Steuereinrichtung mindestens ein dritter Grenzabstand vorgegeben ist, welchem mindestens ein weitergehender Grenzbetätigungsparameter der mindestens einen Betätigungseinheit zugeordnet ist, der also einen dritten einzelnen Arbeitsbereich definiert. Grundsätzlich kann in einer Steuereinheit eine Auswahl an Programmeinstellungen vorgesehen sein, etwa für einen normalen Bau- oder Bohrbetrieb, einen Rüstbetrieb, einen Verfahrbetrieb und weitere Betriebszustände, zu denen in den einzelnen Arbeitsbereichen der jeweiligen Standsicherheitsvorgaben jeweils bestimmte Grenzabstände des Mastes gegenüber der Trägervorrichtung und weitere Grenzparameter mindestens einer Betätigungseinheit hinterlegt sind.

Dabei ist es nach einer Ausführungsvariante der Erfindung besonders bevorzugt, dass die Steuereinrichtung einen Datenspeicher aufweist, in welchem die Grenzabstände mit den jeweils zugeordneten Grenzparametern als Datensätze in Form von einzelnen Arbeitsbereichen abgespeichert sind. Diese Datensätze basieren auf zuvor durchgeführten statischen Berechnungen für eine Kippsicherheit des Gerätes, welche weder vom Bediener noch durch die Steuereinheit selbst verändert werden können. Die Datensätze können in einem internen oder externen Speicher fest vorgegeben sein oder durch eine Datenfernübertragung von einer Zentrale übermittelt oder abgefragt werden.

Das Tiefbaugerät ist vorzugsweise als ein Bohrgerät, eine Schlitzwandfräse, ein Greifer, insbesondere ein Schlitzwandgreifer, eine Ramme oder ein Rüttler ausgebildet. Das Bohrgerät weist insbesondere ein Bohrwerkzeug auf, welches über einen Bohrantrieb drehend angetrieben wird. Die Schlitzwandfräse umfasst grundsätzlich zwei Paare von Fräsrädern, welche an einem unteren Ende eines Fräsrahmens angeordnet sind.

Das erfindungsgemäße Verfahren ist dadurch gekennzeichnet, dass über die Steuereinrichtung übergreifend aus den zulässigen einzelnen Arbeitsbereichen die jeweils höchsten Grenzbetätigungsparameter ausgewählt werden und so einen zulässigen kombinierten Arbeitsbereich bilden, wobei jeder einzelne Arbeitsbereich einen unterschiedlichen Satz von Grenzbetriebsparametern für die Betätigungseinheiten aufweist.

Mit dem Verfahren können die zuvor beschriebenen Vorteile erzielt werden. Das Verfahren kann insbesondere durch das zuvor beschriebene Tiefbaugerät ausgeführt werden.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine teilweise Seitenansicht eines erfindungsgemäßen Tiefbaugeräts;
- Fig. 2: eine perspektivische Ansicht eines erfindungsgemäßen Tiefbaugerätes mit schematischer Darstellung von Arbeitsbereichen; und
- Fig. 3: eine perspektivische Ansicht einer weiteren Ausführungsform eines erfindungsgemäßen Tiefbaugeräts mit schematischer Darstellung der Arbeitsbereiche.

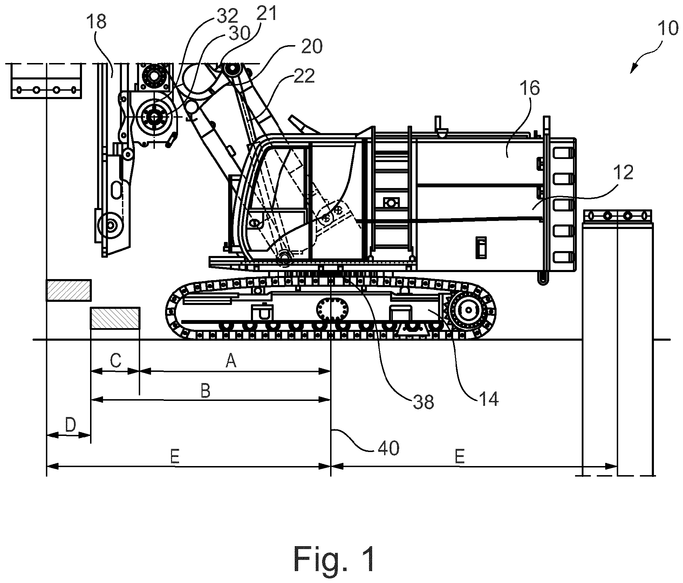

Gemäß Fig. 1 weist ein erfindungsgemäßes Tiefbaugerät 10 eine Trägervorrichtung 12 auf, an welcher als erste Betätigungseinheit 20 eine Verstellmechanik 21 vorgesehen ist. Über diese ist ein etwa vertikal gerichteter Mast 18 in vertikaler und insbesondere in horizontaler Richtung verstellbar gelagert. Die Trägervorrichtung 12 umfasst einen als Raupenfahrwerk ausgebildeten Unterwagen 14, auf welchem ein Oberwagen 16 mit einer Bedienkabine drehbar gelagert ist. Der Oberwagen 16 kann gegenüber dem Unterwagen 14 über eine nicht näher dargestellte Verdreheinrichtung 38 um eine vertikal gerichtete Drehachse 40 verdreht werden. Zur Verstellung des Mastes 18 gegenüber dem Oberwagen 16 ist ein Mastverstellantrieb 22 vorgesehen. Der Mast 18 ist gegenüber der Trägervorrichtung 12 in Bezug auf die Drehachse 40 in horizontaler Richtung verstellbar. Dabei ist in einem Normalbetrieb der horizontale Verstellbereich des Mastes 18 zwischen einem Mindestabstand A in Bezug auf die Drehachse 40 und einem Maximalabstand B verstellbar. Hierdurch ergibt sich für einen Normalbetrieb ein horizontaler Verstellbereich C. Dieser normale Betriebsbereich B des Mastes 18 in horizontaler Richtung erlaubt ein sicheres Arbeiten des Tiefbaugerätes 10 unabhängig davon, welche zugelassenen Arbeitsgeräte, Arbeitskräfte und Betriebsparameter vorgesehen oder eingestellt werden. Der normale Betrieb kann insbesondere ein Arbeitsbetrieb sein, bei welchem etwa ein Loch im Boden, insbesondere eine Bohrung erstellt wird.

Für bestimmte Fälle kann es jedoch wünschenswert sein, den für jeden Betriebszustand sicheren maximalen Arbeitsbereich B um einen erweiterten Abstand D zu vergrößern, um so einen erweiterten Grenzabstand E gegenüber der Drehachse 40 zu erreichen. Dies ist bisher dadurch erfolgt, dass das Tiefbaugerät 10 in Richtung des erweiterten Abstandes D verfahren wurde, was aber weitere Probleme mit sich bringt. So muss z. B. nach dem Aufnehmen eines mit einem erweiterten Abstand von der Drehachse 40 in einem Aufnahmebereich gelagerten Bohrrohrs 5 das Tiefbaugerät 10 wieder an die ursprüngliche Position gefahren werden, was sehr präzise erfolgen muss, damit der ursprüngliche Bohrpunkt wieder gefunden wird. Deshalb konnte es in diesen Fällen vorkommen, dass ein Maschinenbediener stattdessen eigenverantwortlich den statisch sicheren Arbeitsbereich des Gerätes verlassen und unter Ausschaltung von Sicherungseinrichtungen den Mastabstand erweitert hat.

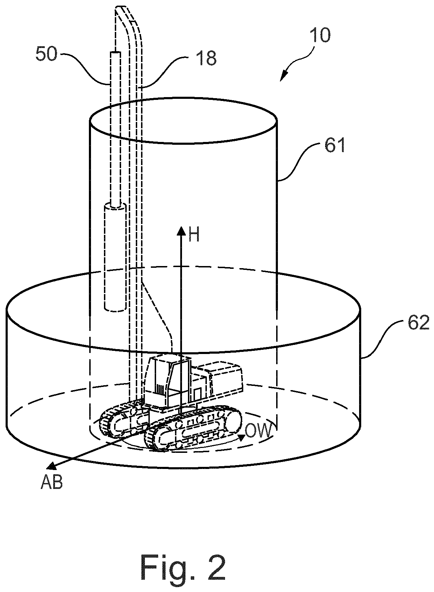

Wie anschaulich in Fig. 2 dargestellt ist, ist bei dem erfindungsgemäßen Tiefbaugerät 10 eine Steuereinrichtung gegeben, bei welcher bei einem Verfahren des Mastes 18 in horizontaler Richtung gegenüber der Trägervorrichtung 12 über den im einzelnen Arbeitsbereich 61 definierten Grenzbetätigungsparameter hinaus mindestens ein Betriebsparameter einer zweiten Betätigungseinheit 30, welche insbesondere eine Seilwinde 32 zum Verstellen eines Drehantriebs 52 entlang des Mastes 18 oder eine Verdreheinrichtung 38 für den Oberwagen 16 ansteuert, auf einen fest eingestellten Grenzbetriebsparameter beschränkt wird.

Dabei ist gemäß der Erfindung bei dem neu angefahrenen Abstand des Mastes 18 und dem begrenzten Betriebsparameter der Betätigungseinheit 30 eine statische Sicherheit gegen ein Kippen des Tiefbaugerätes 10 berechnet, so dass durch die Steuereinrichtung für die sonstigen Betriebsparameter des Tiefbaugerätes 10 die eventuell höheren Grenzbetätigungsparameter aus dem Arbeitsbereich 62 z. B. für die Drehgeschwindigkeit des Oberwagens 16 gewählt werden können.

Auf diese Weise ergibt sich ein erweiterter Arbeitsbereich, nämlich ein zulässiger kombinierter Arbeitsbereich. In dem dargestellten Ausführungsbeispiel gemäß Fig. 2 sind die dargestellten zylindrischen Arbeitsbereiche 61, 62 durch einen maximal möglichen Abstand des Mastes 18 gegenüber der Drehachse 40 in horizontaler Richtung und eine maximal mögliche Hubhöhe des Arbeitselementes 50 an dem Mast 18 definiert. Insbesondere ist zu entnehmen, dass eine Erweiterung des Arbeitsbereiches AB in horizontaler Richtung bei weiter gegebener Kippsicherheit durch eine vorgegebene Reduzierung einer vertikalen Hubhöhe H des Arbeitselementes 50 erreicht werden kann. Mit anderen Worten kann ein Bediener den Mast 18 weiter ausfahren, sofern eine im Arbeitsbereich 62 hinterlegte maximale Hubhöhe H des Arbeitselements 50 nicht überschritten wird. Ist der Mast 18 bereits so weit ausgefahren, dass das Gerät sich ausschließlich im Rahmen der Standsicherheitsvorgabe 62 befindet, wird ein Anheben des Arbeitselements 50 über den in der Standsicherheitsvorgabe 62 hinterlegten Grenzbetätigungsparameter hinaus durch die Steuereinrichtung unterbunden. Weiter ist eine höhere vorgegebene Drehgeschwindigkeit OW des Oberwagens vorgesehen, welche erst bei Verlassen des Bereichs des Arbeitsbereichs 62 beschränkt wird.

Bisher war für den Bediener ein Verlassen des einzelnen Arbeitsbereichs 61 nicht möglich, selbst wenn z. B. die Hubhöhe des Arbeitselements 50 sich im Bereich des einzelnen Arbeitsbereichs 62 befand. Nun steht dem Bediener ohne manuelle Änderung von Vorgaben, eine gesonderte Auswahl oder ein bewusstes Überschreiten von Grenzbetätigungsparametern ein kombinierter zulässiger Arbeitsbereich zu Verfügung, der aus der Summe der beiden Arbeitsbereiche 61, 62 gebildet ist.

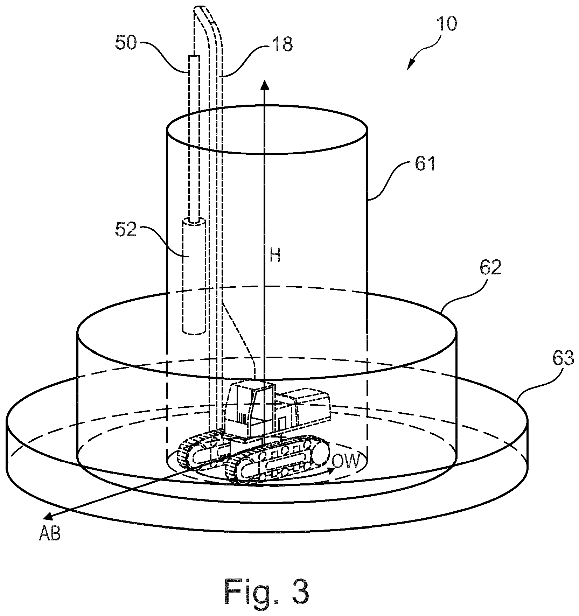

Bei der weiteren Ausführungsform eines erfindungsgemäßen Tiefbaugerätes 10 gemäß Fig. 3 ist eine Erweiterung des Abstandes, also des Arbeitsbereiches AB des Mastes 18 in horizontaler Richtung gegenüber der Trägervorrichtung 12 in Bezug auf die Drehachse 40 in zwei Schritten dargestellt. Basierend auf den einzelnen Arbeitsbereichen 61, 62 gemäß Fig. 2 kann bei einem zweiten weiteren Grenzabstand eine weitere Erweiterung des Arbeitsbereichs in horizontaler Richtung erreicht werden, sofern für die Hubhöhe H des Arbeitselements 50 ein weiterer, niedrigerer Grenzbetätigungsparameter nicht überschritten wird, wie durch einen zylindrischen dritten Arbeitsbereich 63 dargestellt ist.

## Patentansprüche

1. Tiefbaugerät mit
- mindestens einem Arbeitselement (50) für eine Bodenbearbeitung,
- mindestens zwei Betätigungseinheiten (20, 30),
- mindestens einer Messeinrichtung zum Bestimmen mindestens eines aktuellen Betätigungsparameters für jede Betätigungseinheit (20, 30) und
- einer Steuereinrichtung, welche zum Steuern der Betätigungseinheiten (20, 30) ausgebildet ist,
- wobei die Steuereinrichtung mit den Messeinrichtungen in Verbindung steht und ausgebildet ist, zum Vermeiden eines Kippens des Tiefbaugeräts (10) anhand von vorab berechneten Grenzbetätigungsparametern für die Betätigungseinheiten (20, 30), welche genau einen zulässigen Arbeitsbereich definieren, bei Erreichen eines Grenzbetätigungsparameters zumindest einer der Betätigungseinheiten (20, 30) ein weiteres Betätigen dieser Betätigungseinheit (20, 30) einzuschränken oder das Erreichen des Grenzbetätigungsparameters und/oder den Grenzbetätigungsparameter einem Bediener anzuzeigen,
**dadurch gekennzeichnet,**
- **dass** in der Steuereinrichtung mindestens zwei unterschiedliche einzelne Arbeitsbereiche hinterlegt sind, wobei jeder einzelne Arbeitsbereich einen unterschiedlichen Satz von Grenzbetätigungsparametern für die Betätigungseinheiten (20, 30) aufweist, und
- **dass** durch die Steuereinrichtung durch Kombinieren aus den mehreren zulässigen einzelnen Arbeitsbereichen ein kombinierter zulässiger Arbeitsbereich bestimmbar ist, der den genau einen zulässigen Arbeitsbereich ersetzt.

2. Tiefbaugerät nach Anspruch 1,
**dadurch gekennzeichnet,**
**dass** die Steuereinrichtung ausgebildet ist, im Betrieb des Tiefbaugeräts (10) einen aktuellen Wert mindestens eines Betätigungsparameters zu ermitteln und bei einem Überschreiten eines zugehörigen Grenzbetätigungsparameters zumindest eines der zulässigen einzelnen Arbeitsbereiche diesen einzelnen Arbeitsbereich mit seinen maximalen Grenzbetätigungsparametern bei der Bestimmung des kombinierten zulässigen Arbeitsbereichs nicht mehr zu berücksichtigen und den kombinierten zulässigen Arbeitsbereich einzuschränken.

3. Tiefbaugerät nach Anspruch 1 oder 2,
**dadurch gekennzeichnet,**
**dass** die Steuereinrichtung ausgebildet ist, im Betrieb des Tiefbaugeräts (10) einen aktuellen Wert mindestens eines Betätigungsparameters zu ermitteln und bei einem Unterschreiten eines zugehörigen Grenzbetätigungsparameters zumindest eines der bisher nicht berücksichtigten einzelnen Arbeitsbereiche diesen einzelnen Arbeitsbereich mit seinen maximalen Grenzbetätigungsparametern bei der Bestimmung des kombinierten zulässigen Arbeitsbereichs zu berücksichtigen und den kombinierten zulässigen Arbeitsbereich zu erweitern.

4. Tiefbaugerät nach einem der Ansprüche 1 bis 3,
**dadurch gekennzeichnet,**
**dass** eine mindestens zwei einzelne Arbeitsbereiche enthaltende Standsicherheitsvorgabe abhängig von einer Ausrüstung des Tiefbaugeräts (10), insbesondere des Arbeitselements (50), einer Betriebsart und/oder weiterer Kriterien auswählbar ist.

5. Tiefbaugerät nach einem der Ansprüche 1 bis 4,
**dadurch gekennzeichnet,**
**dass** die einzelnen Arbeitsbereiche der Standsicherheitsvorgabe in der Steuereinrichtung abhängig von einer Ausrüstung des Tiefbaugeräts (10), insbesondere dem Arbeitselement (50), in eine Datenbank der Steuereinrichtung übertragen sind.

6. Tiefbaugerät nach einem der Ansprüchen 1 bis 5,
**dadurch gekennzeichnet,**
**dass** als Betätigungsparameter Vorschubkräfte am Arbeitselement (50), Windenkräfte, hydraulische Betriebsdrücke, Betriebsstellungen von Komponenten des Tiefbaugeräts (10), insbesondere des Mastes (18), eines Fahrwerks, eines Oberwagens (16), Zustände zusätzlicher Stützen, Drehgeschwindigkeiten, insbesondere des Oberwagens (16), und/oder Drehbeschleunigungen, insbesondere des Oberwagens (16), umfasst sind.

7. Tiefbaugerät nach einem der Ansprüche 1 bis 6,
**dadurch gekennzeichnet,**
**dass** als weitere passive Betätigungsparameter ein Winddruck und/oder eine Neigung des Tiefbaugeräts (10) und/oder die Masse eines Gegengewichts mittels Sensorelementen der Messeinrichtung bestimmbar oder durch einen Bediener eingebbar sind.

8. Tiefbaugerät nach einem der Ansprüche 1 bis 7,
**dadurch gekennzeichnet,**
**dass** eine Trägervorrichtung (12),
ein Mast (18), welcher verstellbar zumindest in einer horizontalen Richtung an der Trägervorrichtung (12) gelagert ist, wobei zum Verstellen mindestens ein Mastverstellantrieb (22) vorgesehen ist, und
eine Messeinrichtung zum Erfassen einer Verstellposition des Mastes (18) zumindest in der horizontalen Richtung, vorgesehen sind,
wobei die Steuereinrichtung ausgebildet ist, bei einer Erhöhung des Abstands des Mastes (18) über einen Grenzabstand einen vorgegebenen Grenzbetätigungsparameter für die mindestens eine weitere Betätigungseinheit (30) festzusetzen, durch welchen ein Betrieb des Betätigungsantriebes der weiteren Betätigungseinheit (30) begrenzt wird.

9. Tiefbaugerät nach Anspruch 8,
**dadurch gekennzeichnet,**
**dass** die mindestens eine Betätigungseinheit (30) eine Seilwinde (32) zum Verfahren eines Arbeitselementes (50) entlang des Mastes (18), eine Hilfswinde für ein Hilfsseil am Mast (18), eine Stelleinheit zum Neigen des Mastes (18) gegenüber einer Vertikalen, eine Verdreheinrichtung zum Verdrehen des Mastes (18) um eine zu seiner Längserstreckung parallele Achse und/oder eine Verdreheinrichtung zum Verdrehen eines Oberwagens (16) mit dem Mast (18) gegenüber einem Unterwagen (14) aufweist.

10. Tiefbaugerät nach einem der Ansprüche 1 bis 9,
**dadurch gekennzeichhet**,
dass die Steuereinrichtung einen Datenspeicher aufweist, in welchem einzelne Arbeitsbereiche mit den jeweils zugeordneten Grenzbetätigungsparametern als Datensatz abgespeichert sind.

11. Tiefbaugerät nach einem der Ansprüche 1 bis 10,
**dadurch gekennzeichnet,**
**dass** dieses als ein Bohrgerät, eine Schlitzwandfräse, ein Greifer, eine Ramme oder ein Rüttler ausgebildet ist.

12. Verfahren zum Betreiben eines Tiefbaugeräts (10), nach einem der Ansprüche 1 bis 11,
**dadurch gekennzeichnet,**
**dass** durch die Steuereinrichtung die mindestens zwei unterschiedlichen einzelnen Arbeitsbereiche kombiniert und aus den mehreren Arbeitsbereichen ein kombinierter zulässiger Arbeitsbereich bestimmt wird.

## Claims

1. Civil engineering underground equipment comprising
- at least one work element (50) for groundwork,
- at least two actuation units (20, 30),
- at least one measuring device for determining at least one current actuation parameter for each actuation unit (20,30), and
- a controller which is designed for controlling the actuation units (20, 30),
- wherein the controller is connected to the measuring devices and designed for preventing a tipping of the civil engineering underground equipment (10), on the basis of previously calculated limit actuation parameters for the actuation units (20, 30) which define exactly one permissible operating range, when a limit actuation parameter of at least one of the actuation units (20,30) has been reached, to limit a further actuation of this actuation unit (20,30) or to display to an operator that the limit actuation parameter has been reached and/or the limit actuation parameter,
**characterized in that**
- at least two different individual operating ranges are stored in the controller, wherein each individual operating range comprises a different set of limit actuation parameters for the actuation units (20, 30), and
- **in that** the controller can determine a combined permissible operating range, by combining the plurality of permissible individual operating ranges, which combined range replaces the exactly one permissible operating range.

2. Civil engineering underground equipment according to claim 1, **characterized in that**
the controller is designed to determine a current value of at least one actuation parameter, during operation of the civil engineering underground equipment (10), and, in the event of an associated limit actuation parameter of at least one of the permissible individual operating ranges being exceeded, to no longer take account of said individual operating range with the maximum limit actuation parameters thereof, when determining the combined permissible operating range, and to restrict the combined permissible operating range.

3. Civil engineering underground equipment according to claim 1 or 2, **characterized in that**
the controller is designed to determine a current value of at least one actuation parameter during operation of the civil engineering underground equipment (10), and, in the event of falling below an associated limit actuation parameter of at least one of the individual operating ranges not yet taken into account, to take into account said individual operating range with the maximum limit actuation parameters thereof, when determining the combined permissible operating range, and to enlarge the combined permissible operating range.

4. Civil engineering underground equipment according to any one of claims 1 to 3, **characterized in that**
a structural stability specification containing at least two individual operating ranges can be selected depending on the fitting out of the civil engineering underground equipment (10), in particular of the work element (50), a mode of operation, and/or further criteria.

5. Civil engineering underground equipment according to any one of claims 1 to 4, **characterized in that**
the individual operating ranges of the structural stability specification in the controller are transferred into a database of the controller, depending on a fitting out of the civil engineering underground equipment (10), in particular the work element (50).

6. Civil engineering underground equipment according to any one of claims 1 to 5, **characterized in that**
feed forces on the work element (50), winding forces, hydraulic operating pressures, operating positions of components of the civil engineering underground equipment (10), in particular of the mast (18), a chassis, a superstructure (16), states of additional supports, rotational speeds, in particular of the superstructure (16), and/or rotational accelerations, in particular of the superstructure (16), are included as actuation parameters.

7. Civil engineering underground equipment according to any one of claims 1 to 6, **characterized in that**
as further passive actuation parameters, a wind pressure and/or an inclination of the civil engineering underground equipment (10), and/or the mass of a counterweight, can be determined by means of sensor elements of the measuring device, or can be input by an operator.

8. Civil engineering underground equipment according to any one of claims 1 to 7, **characterized in that**
a support device (12),
a mast (18) that is mounted on the support device (12) so as to be adjustable at least in a horizontal direction, wherein at least one mast adjustment drive (22) is provided for adjustment, and
a measuring device for detecting an adjustment position of the mast (18), at least in the horizontal direction, are provided,
wherein the controller is designed to set a specified limit actuation parameter for the at least one further actuation unit (30), by means of which an operation of the actuation drive of the further actuation unit (30) is limited, when the distance of the mast (18) increases beyond a limit distance.

9. Civil engineering underground equipment according to claim 8, **characterized in that**
the at least one actuation unit (30) comprises a cable winch (32) for moving a work element (50) along the mast (18), an auxiliary winch for an auxiliary cable on the mast (18), an actuator for tilting the mast (18) relative to a vertical, a rotation means for rotating the mast (18) about an axis in parallel with the longitudinal extension thereof, and/or a rotation means for rotating a superstructure (16) with the mast (18), relative to an undercarriage (14).

10. Civil engineering underground equipment according to any one of claims 1 to 9, **characterized in that**
the controller comprises a data memory in which individual operating ranges with the limit actuation parameters associated in each case are stored as dataset.

11. Civil engineering underground equipment according to any one of claims 1 to 10, **characterized in that**
said equipment is designed as a drill, a trench wall cutter, a gripper, a ram or a vibrator.

12. Method for operating an civil engineering underground equipment (10), according to any one of claims 1 to 11,
**characterized in that**
the controller combines the at least two different individual operating ranges, and determines a combined permissible operating range from the plurality of operating ranges.

## Revendications

1. Engin de travaux de génie civil comportant
- au moins un élément de travail (50) pour un travail du sol,
- au moins deux unités d'actionnement (20, 30),
- au moins un système de mesure pour définir au moins un paramètre d'actionnement instantané pour chaque unité d'actionnement (20, 30), et
- un système de commande, lequel est réalisé pour commander les unités d'actionnement (20, 30),
- dans lequel le système de commande est relié aux systèmes de mesure et est réalisé pour restreindre un autre actionnement de ladite unité d'actionnement (20, 30) lors de l'atteinte d'un paramètre d'actionnement limite d'au moins une des unités d'actionnement (20, 30) pour éviter un basculement de l'engin de travaux de génie civil (10) à l'aide de paramètres d'actionnement limite calculés au préalable pour les unités d'actionnement (20, 30), lesquels définissent précisément une zone de travail autorisée ou pour afficher à un utilisateur l'atteinte du paramètre d'actionnement limite et/ou le paramètre d'actionnement limite,
**caractérisé en ce que**
- au moins deux zones de travail individuelles différentes sont enregistrées dans le système de commande, dans lequel chaque zone de travail individuelle présente un jeu différent de paramètres d'actionnement limite pour les unités d'actionnement (20, 30), et
- **en ce que** peut être définie par le système de commande, par la combinaison des plusieurs zones de travail individuelles autorisées, une zone de travail autorisée combinée, qui remplace précisément la zone de travail autorisée.

2. Engin de travaux de génie civil selon la revendication 1,
**caractérisé en ce que**
le système de commande est réalisé pour déterminer, lors du fonctionnement de l'engin de travaux de génie civil (10), une valeur instantanée d'au moins un paramètre d'actionnement et pour ne plus prendre en compte, lors d'un dépassement d'un paramètre d'actionnement limite associé d'au moins une des zones de travail individuelles autorisées, ladite zone de travail individuelle avec ses paramètres d'actionnement limite maximaux lors de la définition de la zone de travail autorisée combinée et pour restreindre la zone de travail autorisée combinée.

3. Engin de travaux de génie civil selon la revendication 1 ou 2,
**caractérisé en ce que**
le système de commande est réalisé pour déterminer, lors du fonctionnement de l'engin de travaux de génie civil (10), une valeur instantanée d'au moins un paramètre d'actionnement et pour prendre en compte, lors d'un dépassement d'un paramètre d'actionnement limite associé d'au moins une des zones de travail individuelles non prises en compte jusqu'à présent, ladite zone de travail individuelle avec ses paramètres d'actionnement limite maximaux lors de la définition de la zone de travail autorisée combinée et pour élargir la zone de travail autorisée combinée.

4. Engin de travaux de génie civil selon l'une des revendications 1 à 3,
**caractérisé en ce que**
une spécification de stabilité contenant au moins deux zones de travail individuelles peut être choisie en fonction d'un équipement de l'engin de travaux de génie civil (10), en particulier de l'élément de travail (50), d'un type de fonctionnement et/ou d'autres critères.

5. Engin de travaux de génie civil selon l'une des revendications 1 à 4,
**caractérisé en ce que**
les zones de travail individuelles de la spécification de stabilité dans le système de commande sont transférées dans une base de données du système de commande en fonction d'un équipement de l'engin de travaux de génie civil (10), en particulier de l'élément de travail (50).

6. Engin de travaux de génie civil selon l'une des revendications 1 à 5,
**caractérisé en ce que**
les paramètres d'actionnement comprennent des forces d'avancement sur l'élément de travail (50), des forces du vent, des pressions de fonctionnement hydrauliques, des positions de fonctionnement de composants de l'engin de travaux de génie civil (10), en particulier du mât (18), d'un train de roulement, d'une structure supérieure (16), des états de supports supplémentaires, des vitesses de rotation, en particulier de la structure supérieure (16), et/ou des accélérations de rotation, en particulier de la structure supérieure (16).

7. Engin de travaux de génie civil selon l'une des revendications 1 à 6,
**caractérisé en ce que**
une pression du vent et/ou une inclinaison de l'engin de travaux de génie civil (10) et/ou la masse d'un contrepoids peuvent être définies au moyen d'éléments de capteur du système de mesure ou peuvent être entrées par un utilisateur en tant qu'autres paramètres d'actionnement passifs.

8. Engin de travaux de génie civil selon l'une des revendications 1 à 7,
**caractérisé en ce que**
sont prévus un dispositif de support (12),
un mât (18), lequel est monté de manière ajustable au moins dans une direction horizontale sur le dispositif de support (12), dans lequel au moins un entraînement d'ajustement de mât (22) est prévu pour l'ajustement, et
un système de mesure pour détecter une position d'ajustement du mât (18) au moins dans la direction horizontale,
dans lequel le système de commande est réalisé pour fixer, lors d'une augmentation de la distance du mât (18) au-dessus d'une distance limite, un paramètre d'actionnement limite spécifié pour l'au moins une autre unité d'actionnement (30), par lequel un fonctionnement de l'entraînement d'actionnement de l'autre unité d'actionnement (30) est limité.

9. Engin de travaux de génie civil selon la revendication 8,
**caractérisé en ce que**
l'au moins une unité d'actionnement (30) présente un treuil (32) pour déplacer un élément de travail (50) le long du mât (18), un treuil auxiliaire pour un câble auxiliaire sur le mât (18), une unité de réglage pour incliner le mât (18) par rapport à une verticale, un système de rotation pour faire tourner le mât (18) autour d'un axe parallèle par rapport à son extension longitudinale et/ou un système de rotation pour faire tourner une structure supérieure (16) avec le mât (18) par rapport à une structure inférieure (14).

10. Engin de travaux de génie civil selon l'une des revendications 1 à 9,
**caractérisé en ce que**
le système de commande présente une mémoire de données, dans laquelle des zones de travail individuelles sont sauvegardées avec les paramètres d'actionnement limite respectivement associés en tant que jeu de données.

11. Engin de travaux de génie civil selon l'une des revendications 1 à 10,
**caractérisé en ce que**
celui-ci est réalisé en tant qu'engin de forage, en tant qu'une fraise pour parois moulées, un grappin, un engin de fonçage ou un secoueur.

12. Procédé pour faire fonctionner un engin de travaux de génie civil (10) selon l'une des revendications 1 à 11,
**caractérisé en ce que**
les au moins deux différentes zones de travail individuelles sont combinées par le système de commande et une zone de travail autorisée combinée est définie à partir des plusieurs zones de travail.
